(19) **Europäisches Patentamt**
**European Patent Office**
**Office européen des brevets**

(11) **EP 2 210 255 B1**

(12) **FASCICULE DE BREVET EUROPEEN**

(45) Date de publication et mention
de la délivrance du brevet:
**02.01.2013 Bulletin 2013/01**

(21) Numéro de dépôt: **08871186.6**

(22) Date de dépôt: **07.11.2008**

(51) Int Cl.:
***G11B 5/855*** *(2006.01)*

(86) Numéro de dépôt international:
**PCT/FR2008/001583**

(87) Numéro de publication internationale:
**WO 2009/092923 (30.07.2009 Gazette 2009/31)**

(54) **DISPOSITIF D'ENREGISTREMENT MAGNÉTIQUE, NOTAMMENT POUR DISQUE DUR**

MAGNETISCHE SPEICHERANORDNUNG, INSBESONDERE FÜR EIN FESTPLATTENLAUFWERK

MAGNETIC STORAGE DEVICE, PARTICULARLY FOR A HARD DRIVE

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **12.11.2007 FR 0707916**

(43) Date de publication de la demande:
**28.07.2010 Bulletin 2010/30**

(73) Titulaires:
• **Centre National de la Recherche Scientifique
75016 Paris (FR)**
• **Universite Joseph Fourier (Grenoble 1)
38041 Grenoble Cedex 9 (FR)**
• **Commissariat à l'Énergie Atomique
et aux Énergies Alternatives
75015 Paris (FR)**

(72) Inventeurs:
• **GAUDIN, Gilles, Louis
38700 Le Sappey (FR)**

• **ZERMATTEN, Pierre-Jean
38000 Grenoble (FR)**
• **MIRON, Ioan, Mihai
2-4 Mataro 08301 (ES)**
• **SCHUHL, Alain
38000 Grenoble (FR)**

(74) Mandataire: **Jacquard, Philippe Jean-Luc et al
Cabinet ORES
36, rue de St Pétersbourg
75008 Paris (FR)**

(56) Documents cités:
**FR-A- 2 859 306      US-A1- 2007 172 705
US-B1- 6 777 112**

• **KONDO ET AL.: "Magnetic properties of magnetic
dot arrays with a soft magnetic underlayer"
JOURNAL OF THE MAGNETICS SOCIETY OF
JAPAN, vol. 30, no. 2, 2006, pages 112-115,
XP002471711 JP**

EP 2 210 255 B1

**Description**

La présente invention a pour objet un dispositif d'enregistrement magnétique, notamment pour un moyen de stockage tel qu'un disque dur et son procédé de fabrication.

L'enregistrement magnétique perpendiculaire pour lequel les points mémoire sont enregistrés dans un médium à aimantation hors du plan a été identifié comme une voie très prometteuse pour l'augmentation des densités de stockages (vers les ultra-hautes densités de stockage) dans les disques durs d'ordinateur. Cette technologie est implantée et commercialisée depuis peu par les principaux industriels du secteur: Seagate, Hitachi, Toshiba, etc ...

Différentes solutions ont été envisagées pour résoudre le problème de l'instabilité super paramagnétique et atteindre des ultra-hautes densités de stockage, par exemple 1Tbit par pouce carré, soit 0,155 Tbit par cm$^2$, ce qui correspond à un point mémoire de 25 nm x 25 nm.

Une des solutions les plus prometteuses est la mise en oeuvre de supports ou "médias" dits structurés qui permettent entre autres une séparation physique entre les points mémoire.

Cette solution présente néanmoins des limitations gênantes dont une des plus importantes est la large distribution des champs de retournement des différents points, qui est due notamment à l'étape de structuration de la couche magnétique.

La principale limitation est la présence d'une large distribution des champs de retournement qui est observée par de nombreux groupes et a été rapportée lors de la dernière conférence Intermag/MMM en 2007. Cette large distribution rend problématique l'application de ces médias au stockage d'information voir notamment "Patterned media for future magnetic data storage", de B. D. Terris, T. Thomson et G. Hu, Microsyst. Tech. 13, pages 189-196 2007.

Lorsque l'on structure une couche en plots, le champ coercitif des plots devient plus grand que celui de la couche continue et peut même être très fortement augmenté. Cela a par exemple été observé dans l'article "Enhanced Coercivity in Submicrometer-Sized Ultrathin Epitaxial Dots with In-Plane Magnetization" de O Fruchart, J-F. Nozières, W. Wernsdorfer, D. Givord, F. Rousseaux et D. Decanini, Physical Review Letters 82, 1305, 1999.

Pour des multicouches Co/Pt déposées pour former un support ou médium continu, le champ coercitif est de 170Oe alors qu'il devient supérieur à 1000Oe lorsqu'elles sont déposées pour former un médium structuré en plots de 400 nm de côté, voir par exemple "Magnetic properties of Co/Pt multilayers deposited on silicon dot arrays", de S. Landis, B. Rodmacq et B. Dieny, Physical Review B 6212271 2000. Dans cette configuration, le plot structuré représente le point mémoire lui-même et cette structuration peut avoir pour conséquence que le champ de retournement de ces plots peut devenir très grand et même parfois supérieur au champ à saturation des pièces polaires d'écriture rendant l'utilisation de ces médias problématique.

Une autre difficulté des médias ou supports structurés est le fait que la tête d'écriture/lecture ne voit plus un milieu continu lisse mais une succession de dépressions et de plots qui peuvent gêner son vol. Cette limitation est moins importante que celle présentée précédemment dans le sens où des solutions peuvent être apportées comme celle consistant par exemple à remplir l'espace entre les plots d'un matériau non magnétique.

Les défauts induits par la structuration du médium lui-même qui correspondent entre autres à des inhomogénéités géométriques sont très difficiles à maîtriser surtout quand la taille des points mémoires devient de plus en plus petite pour aller vers les ultra-hautes densités de stockage.

L'idée de base de l'invention est d'enregistrer l'information sur un support d'enregistrement n'ayant pas été altéré par des processus de structuration et de contrôler la taille du point mémoire par des éléments magnétiques structurés situés en dehors de la couche continue, et dont l'aimantation reste inchangée lors d'une procédure d'écriture du support d'enregistrement.

L'invention concerne ainsi un dispositif d'enregistrement magnétique comprenant au moins un support d'enregistrement non structuré présentant au moins une couche magnétique élémentaire, ledit support d'enregistrement ayant une aimantation perpendiculaire au plan du support caractérisé en ce qu'il comporte des éléments magnétiques ayant une aimantation perpendiculaire au plan dudit support et un champ de retournement supérieur au champ de retournement de la surface d'enregistrement, et qui sont séparés du support d'enregistrement par une couche de découplage en matériau non magnétique, de sorte que les éléments magnétiques produisent un champ dipolaire dans le support d'enregistrement, les éléments magnétiques étant espacés les uns des autres par des régions non magnétiques, chaque élément magnétique définissant lors d'une opération d'écriture un point mémoire dans la surface d'enregistrement.

Comme la couche sur laquelle l'information est stockée n'est pas structurée en plots, son champ de retournement n'est pas altéré par la structuration, et les éléments magnétiques rapportés confinent le domaine magnétique dans le point mémoire de la couche continue en raison du champ dipolaire qu'ils produisent. Ce champ dipolaire est directement proportionnel à l'aimantation de l'élément magnétique rapporté, laquelle ne dépend que de leur volume qui n'est que peu influencé par d'éventuels défauts de fabrication. Certes, des défauts de fabrication sont susceptibles de modifier fortement le champ de retournement des éléments magnétiques, mais il suffit qu'il reste en tous cas supérieur au champ de retournement généré par la tête d'écriture dans le support d'enregistrement non structuré mono ou multicouches.

L'aimantation produite par les éléments magnétiques variant peu d'un élément à l'autre, il en est de même des champs de retournement induits par le champ dipolaire additionnel.

Il en résulte au niveau de la surface d'enregistrement, que la distribution des champs de retournement est très fortement diminuée par rapport aux techniques connues de structuration.

Le champ dipolaire produit par les éléments magnétiques permet de définir les points mémoire sans structurer le support d'enregistrement. L'existence de la couche de découplage en matériau non magnétique a pour conséquence d'éviter un couplage magnétique par échange qui pourrait entraîner une duplication de l'aimantation des éléments magnétiques dans le support d'enregistrement, et donc de permettre une inscription du support d'enregistrement en conservant l'aimantation des éléments magnétiques. Comme les éléments magnétiques ont un champ de retournement supérieur au champ de retournement du support d'enregistrement, ils conservent leur aimantation lors d'une procédure d'écriture.

Ces caractéristiques diffèrent essentiellement de l'enseignement de la Demande de Brevet US 2007/0172705 dans laquelle une inscription de données a lieu dans une première couche polycristalline composée de grains magnétiques éventuellement séparés entre eux par un matériau de découplage destiné à diminuer le couplage intergranulaire d'échange, et cette inscription est reportée dans une deuxième couche qui sert à l'enregistrement et qui est continue. Cette deuxième couche est composée elle aussi de grains magnétiques, le couplage intergranulaire d'échange étant plus fort dans cette seconde couche que dans la première, ledit report s'effectuant alors grâce à un couplage par échange entre ces deux couches. A cet effet, il faut mettre en oeuvre deux matériaux ayant deux températures de Curie différentes (la première couche a la température de Curie la plus élevée) et chauffer le dispositif au dessus des deux températures de Curie, puis les refroidir progressivement, ce qui d'une part, implique un effacement du support d'enregistrement lors de chaque opération d'inscription, et d'autre part, une grande complication de mise en oeuvre. Cette technique ne permet donc pas une inscription directe de la couche d'enregistrement, mais nécessite un report par échange sur la couche d'enregistrement qui doit être vierge de toute magnétisation.

Le champ de retournement des éléments magnétiques selon l'invention est au moins égal à 1,1 fois le champ de retournement du support d'enregistrement pour éviter que le champ des éléments magnétiques ne s'inverse lors d'une écriture du support. Il est avantageusement compris entre 2 et 20 fois, de préférence entre 5 et 10 fois, le champ de retournement du support d'enregistrement. Toute valeur supérieure à 20 est également envisageable.

Le support d'enregistrement et/ou les éléments magnétiques peuvent être une couche continue à aimantation perpendiculaire comportant une ou plusieurs couches élémentaires, notamment un alliage à aimantation perpendiculaire (par exemple FePt, FePd, CoPt, Tb-FeCo, GdCo) ou bien encore au moins deux couches magnétiques élémentaires à aimantation perpendiculaire (par exemple Co/Pt, Co/Pd, Fe/Pt, Fe/Pd, Au/Co), ou bien encore deux couches élémentaires associant en alternance un métal et un diélectrique (ou un semiconducteur) par exemple Co/alumine, Co/Si.

Le support d'enregistrement peut être également constitué par un matériau polycristallin.

Les éléments magnétiques et le support d'enregistrement sont avantageusement séparés par une couche de découplage en un matériau non magnétique d'épaisseur comprise entre 0,5 nm et 15 nm (par exemple 2 nm).

Les régions non magnétiques qui séparent entre eux les éléments magnétiques peuvent être de simples espaces d'air entre les éléments magnétiques.

Avantageusement, on forme une couche structurée sensiblement plane comportant les régions magnétiques séparées par un matériau de remplissage non magnétique.

L'ensemble constitué par le support d'enregistrement et les éléments magnétiques est destiné à être disposé notamment sur la surface d'un moyen de stockage d'informations tel qu'un disque dur, et dans un premier mode préféré les éléments magnétiques sont en contact avec le substrat, et dans un deuxième mode, le support d'enregistrement est en contact avec ledit substrat.

L'invention concerne également un procédé de fabrication d'un dispositif tel que défini ci-dessus. Il met en oeuvre le dépôt d'une ou plusieurs couches élémentaires de matériau magnétique pour former un support d'enregistrement non structuré et la réalisation d'un réseau d'éléments magnétiques, de préférence séparé du support d'enregistrement par une couche de découplage en matériau non magnétique.

Selon une première variante préférée, le procédé est caractérisé en ce que la réalisation du réseau d'éléments magnétiques ou plots est effectuée avant ledit dépôt d'une ou plusieurs couches élémentaires et met en oeuvre le dépôt d'une couche en matériau non magnétique.

Selon une deuxième variante, le procédé est caractérisé en ce que la réalisation du réseau d'éléments magnétiques ou plots est effectuée après ledit dépôt d'un ou plusieurs couches formant le support d'enregistrement.

Le procédé peut mettre en oeuvre, pour réaliser le réseau d'éléments magnétiques, une structuration pour former des trous en des emplacements destinés à former lesdits éléments magnétiques, après quoi au moins une couche d'un matériau magnétique est déposé, puis une planarisation de ladite couche est effectuée jusqu'au matériau non magnétique.

Le procédé peut mettre en oeuvre, pour réaliser ledit réseau d'éléments magnétiques, le dépôt d'une ou plusieurs couches de matériau magnétique qui est structuré pour former lesdits éléments magnétiques, après quoi est effectué le dépôt d'une couche de matériau non magnétique, suivi de sa planarisation.

L'invention sera mieux comprise à la lecture de la description ci-après, en liaison avec les dessins dans lesquels :

- la figure 1 représente une vue partielle en coupe d'un disque dur selon l'art antérieur dans lequel la zone d'écriture est à aimantation perpendiculaire et n'est pas structurée,
- la figure 2 représente le schéma d'empilement de couches de disque dur de la figure 1,
- la figure 3 est une coupe partielle d'un empilement pour un support ou médium magnétique structuré de l'art antérieur,
- les figures 4a à 4c représentent trois modes de réalisation d'un dispositif d'enregistrement magnétique selon l'invention sur un moyen de stockage d'informations de type disque dur,
- les figures 5a, 5b et 6 illustrent le phénomène de confinement induit dans un support d'enregistrement par un élément magnétique selon l'invention. Ces figures 5a et 6 correspondent au cas d'un plot de forme carrée, et la figure 5b au cas d'un plot de forme circulaire de 400 nm de diamètre, avec un espaceur d'épaisseur 2 nm dans les deux cas.
- les figures 7a et 7b, et 8a à 8c illustrent une opération d'écriture dans le cas où le support d'enregistrement et les éléments magnétiques ont au départ des aimantations de sens opposés (figures 7a et 7b) ou dans le même sens (figures 8a à 8c),
- les figures 9a et 9b illustrent une opération d'écriture sur un dispositif selon l'invention avec une tête d'écriture connue,
- les figures 10a à 10g, 10a', 10d' ainsi que 11a à 11e illustrent deux variantes de procédé de fabrication d'un dispositif d'enregistrement selon l'invention intégré à un substrat de disque dur.

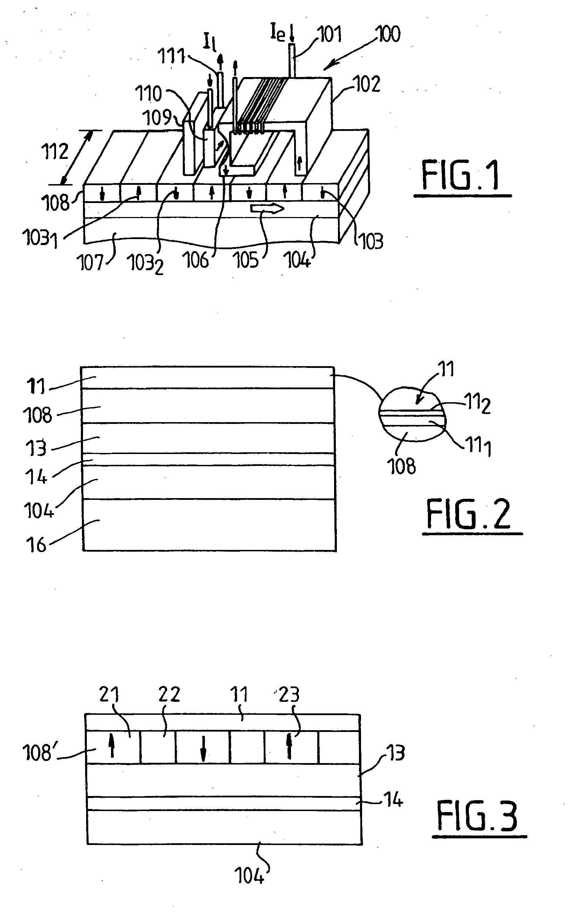

La figure 1 montre un disque dur d'un type connu qui présente un support 107 revêtu d'une couche 108 non structurée dans laquelle une tête de lecture/écriture 100 inscrit et lit les informations sur une piste de largeur 112. Elle comporte une tête d'écriture 102 et une tête de lecture 110 bordée par un écran 109.

Sur cette figure, $I_e$ désigne le courant d'écriture à travers la bobine d'écriture 101, qui sert à magnétiser le pôle d'écriture 102 et changer le sens de l'aimantation 103 de la couche d'écriture 108 (perpendiculaire au plan de la couche).

Pour l'écriture, le dispositif comprend la couche d'enregistrement à aimantation perpendiculaire 108 (qui présente une ou plusieurs couches élémentaires) dans laquelle s'effectue l'écriture et de préférence la couche 104 de relativement basse coercitivité, qui canalise le champ magnétique généré par le pôle d'écriture 102 dans son cheminement (figuré par la flèche 105) vers le pôle de retour 106 de la tête d'écriture 102. Ce système de double-couche est avantageux car il augmente l'amplitude du champ ressenti par la couche d'écriture et assure que celui-ci est bien perpendiculaire à la couche d'écriture.

L'écriture d'un point d'information a lieu en envoyant des impulsions de courant d'écriture $I_e$ dans le bobinage 101 autour de la pièce polaire de la tête d'écriture 102.

Le champ généré retourne alors l'aimantation du domaine à écrire entre les deux orientations vers le haut et vers le bas. La lecture se fait en envoyant un courant de lecture I dans les fils de lecture 111 de l'élément de lecture 110 et en lisant la tension aux bornes de ces fils 111 quand la tête de lecture 110 passe sur des domaines orientés vers le haut $103_1$ et vers le bas $103_2$. La résistance de l'élément de lecture 110 dépend en effet du champ magnétique auquel il est soumis. Il est constitué actuellement par des empilements à base de vannes de spin métallique ou de jonctions tunnels magnétiques.

Le disque présente un empilement de plusieurs couches comme représenté sur la figure 2. Sur le substrat proprement dit 16 du disque dur pouvant être constitué par exemple de verre, d'aluminium ou d'un alliage d'aluminium recouvert d'une couche de NiP ou d'un autre produit, ou encore de silicium, de carbure de silicium ou de tout autre matériau présentant une surface lisse (substrat de plastique, résine, polycarbonate,...), sont déposées plusieurs couches en commençant par exemple par la sous-couche 104. Celle-ci est en général constituée par un matériau ferromagnétique doux (à faible coercitivité) mais peut-être aussi constitué par d'autres matériaux comme par exemple un matériau ferrimagnétique comme proposé par Inamura dans la Demande de Brevet US 2007/0124749. Elle peut aussi être constituée de plusieurs couches élémentaires comme par exemple de deux couches de matériau ferromagnétique doux entourant une couche d'un matériau non magnétique (par exemple du Ruthénium, de l'Iridium, du Chrome,...) qui couple ces deux couches magnétiques anti-ferromagnétiquement de façon à réduire les champs de fuite. Ce type de double-couche est décrit par exemple dans la Demande de Brevet US 2003/0022023, (Carey) et dans le Brevet US 6,686,070, (Futamoto). Les couches magnétiques de cette ou ces sous-couche(s) sont en général constituées de matériaux magnétiques perméables amorphes comme les alliages CoNiFe, FeCoB, CoTa-Zr,...

La sous-couche 104 a en général une épaisseur comprise entre 50 et 400nm.

Sur cette sous-couche 104, sont ensuite déposées une couche intermédiaire 14 et la sous-couche 13 de la couche d'enregistrement 108. Le but des deux couches 14 et 13 est à la fois d'empêcher un couplage par échange entre la sous-couche 104 et la couche d'enregistrement 108 et de promouvoir la croissance de la couche d'enregistrement. La couche intermédiaire 14 peut-être constituée d'un matériau amorphe ou d'un matériau cristallin de structure cubique à faces centrées ou hexagonale compacte : par exemple un alliage de Ni ou de Cu comme NiFe ou CuNb.

La sous-couche 13 peut-être constituée par exemple de Ru ou d'un alliage de Ru.

La couche d'enregistrement 108 est constituée par un matériau magnétique à aimantation perpendiculaire comme par exemple un alliage granulaire de CoPt-Cr. Elle peut aussi être constituée de plusieurs couches élémentaires magnétiques à aimantation perpendiculaire comme par exemple Co/Pt, Co/Pd, Fe/Pt,...

La surcouche 11 qui revêt la couche d'enregistrement 108 est en général constituée (de bas en haut dans l'arrondi agrandi) d'une couche protectrice $11_1$ appliquée sur la couche d'enregistrement 108 puis d'une couche de lubrifiant $11_2$. La couche protectrice $11_1$ est en général constituée principalement de carbone, déposé par exemple par pulvérisation ou dépôt chimique en phase vapeur (CVD) et la couche lubrifiante $11_2$ d'un liquide lubrifiant par exemple du perfluoropolyéther.

Dans les dispositifs à médium structuré connus, la couche d'enregistrement 108 n'est plus continue. Elle est remplacée par une couche structurée.

La figure 3 présente un exemple de médium structuré :

On retrouve les couches 104, 14, 13, et 11 décrites précédemment tandis que la couche d'enregistrement est constituée par une couche structurée 108' comprenant des portions de matériau magnétique 21 d'aimantation 23 perpendiculaire au plan de la couche 108' qui sont séparées par du matériau non magnétique 22. Les portions de matériau magnétique 21 constituent les points mémoire, en général de section carrée ou circulaire, de la couche structurée 108'.

Selon l'invention, l'enregistrement est réalisé grâce à deux zones ou couches superposées, à savoir un support magnétique non structuré dans laquelle l'information est stockée, et une couche comprenant un réseau d'éléments magnétiques. Ces deux couches sont séparées par une couche non magnétique formant espaceur et dont la fonction est d'éviter un couplage direct entre les éléments magnétiques et le support magnétique non structuré, de sorte que le support magnétique est soumis à un champ dipolaire généré par les éléments magnétiques.

S'il n'y avait pas de couche d'espacement non magnétique entre les éléments magnétiques ou plots et le support d'enregistrement, les propriétés seraient totalement différentes, car il y aurait alors un couplage direct (et non un couplage par un champ dipolaire).

Un tel couplage direct induit en effet un couplage par échange, qui est beaucoup plus fort en énergie que le couplage dipolaire selon l'invention, et une réplication de la configuration magnétique des éléments magnétiques dans la couche support d'enregistrement. Celui-ci ne pourrait alors plus jouer son rôle car, une fois fixés le sens et l'aimantation des éléments magnétiques, il est impossible de faire changer l'aimantation de la couche continue voisinant l'élément magnétique sans changer le sens de l'aimantation de l'élément magnétique.

Un tel système que l'on trouve décrit dans "Electric Résistance of Magnetic Domain with NiFe wires with CoSm Pinning Pads" de T. NAGAHAMA et Collaborateurs (Journal of Applied Physics, 87, p. 5648 et suivantes) ne permet pas de réaliser un enregistrement magnétique dans un support magnétique.

L'ensemble de ces deux couches séparées par un espaceur forme un dispositif d'enregistrement que l'on peut par exemple disposer sur un substrat d'un moyen de stockage d'information tel qu'un disque dur. Chacune de ces deux couches peut être constituée d'un empilement de couches élémentaires.

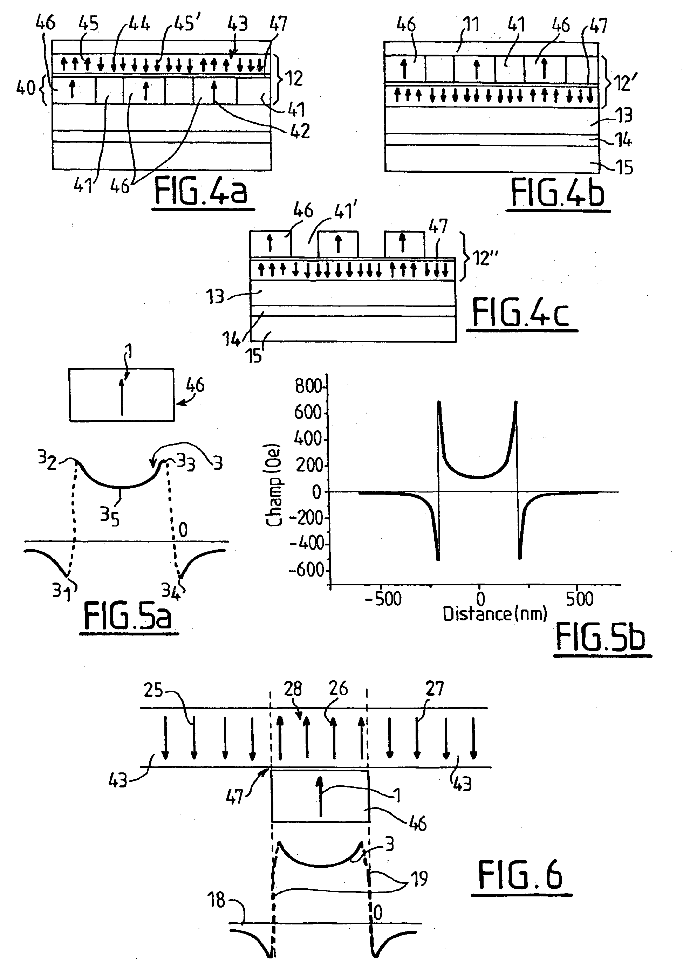

Les figures 4a à 4c sont des exemples d'empilement comportant le dispositif d'enregistrement. Dans les trois cas, le dispositif d'enregistrement 12, 12' et 12" est constitué de deux éléments : un support d'enregistrement non structuré 43 présentant une/ou plusieurs couches élémentaires et une couche structurée 40 comportant des parties non magnétiques 41 ou 41' séparant des éléments ou plots magnétiques 46 dont l'aimantation, représentée par la flèche 42, est perpendiculaire au plan de la couche 40 pour rayonner un champ magnétique dipolaire qui piège les domaines dans le support d'enregistrement 43 dans lequel sont inscrites les informations.

Dans la couche 43, la flèche 44 représente l'aimantation (dirigée vers le bas) entre deux points d'information, et les flèches 45 et 45' l'aimantation d'un point d'information orientée vers le haut (flèches 45) ou bien vers le bas (flèches 45').

Le support d'enregistrement 43 et la couche structurée 40 sont séparées par un espaceur constitué par une couche non magnétique 47.

A la figure 4a, le dispositif d'enregistrement est désigné par 12 et la couche structurée 40 est située sous le support d'information 43 tandis qu'à la figure 4b le dispositif d'enregistrement est désigné par 12' et la couche structurée 40 est située au dessus du support d'informations 43. La figure 4c (dispositif d'enregistrement 12") se distingue de la figure 4b par le fait que l'espace 41' séparant deux éléments magnétiques 46 dans la couche structurée est vide tandis que la sur-couche 11 est omise.

La fonction de la couche non-magnétique 47 est d'empêcher le couplage magnétique direct par échange entre les deux couches magnétiques 40 et 43. Elle peut être métallique (par exemple en Cu, Pt, Ru, ....) ou non métallique (par exemple un oxyde comme AlxOy, MgO, TiO2,....) Son épaisseur est par exemple comprise entre 0,5 nm et 15 nm, notamment entre 1 nm et 10 nm, par exemple sensiblement égale à 2 nm.

L'information est enregistrée sur un support magnétique 43 n'ayant pas été altéré par un processus de structuration et la taille du point mémoire est contrôlée par les éléments magnétiques structurés qui sont externes au support magnétique d'enregistrement. Ainsi, si le processus de retournement et donc les champs de retournement sont très sensibles à la présence des défauts, ceux-ci sont en général ponctuels ou d'extension spatiale faible. L'aimantation des éléments magnétiques est donc peu modifiée par la présence de ces éventuels défauts. Cette aimantation qui importe pour la définition des points mémoire est donc sensiblement la même d'une nanostructure à l'autre. Ceci est explicité ci-après en relation avec les figures 5a à 8c.

La figure 5a représente (repère 3) l'allure calculée du champ dipolaire généré par un élément magnétique de section carrée 46 à aimantation perpendiculaire, à la verticale de cet élément avec un espaceur 47 d'épaisseur 2 nm. La référence 1 désigne la direction de l'aimantation dans l'élément 46, ici perpendiculaire à celui-ci et dirigé vers le haut. Le champ 3 présente, deux maxima locaux positif $3_2$ et $3_3$ et négatif $3_1$ et $3_4$ et une région de plateau $3_5$ entre $3_2$ et $3_3$.

Pour les plots de forme circulaire (Figure 5b), la forme du champ rayonnée est peu modifiée.

La forme de ce champ induit dépend peu de la taille des éléments magnétiques 46.

On considère maintenant une couche non structurée à aimantation perpendiculaire. Initialement, l'aimantation de cette couche est orientée vers le bas.

Pour inscrire de l'information, on retourne localement cette aimantation vers le haut. Le domaine nucléé par l'action de la tête d'écriture se propage alors jusqu'à atteindre sa taille d'équilibre. Celle-ci est en général trop grande pour être compatible avec les ultrahautes densités d'enregistrement Par exemple les multicouches à aimantation perpendiculaire $Pt_{1.8nm}$/$(Co_{0.5nm}/Pt_{1.8nm})4$ , c'est-à-dire une couche élémentaire de 1,8 nm de Pt comme couche tampon et la réplication de 4 fois deux couches élémentaires de 0,5 nm de Co et 1,8 nm de Pt, ont des domaines à l'équilibre d'une taille supérieure à 1$\mu$m (voir Magnetic properties of Co/Pt multilayers deposited on silicon dot arrays, S. Landis, B. Rodmacq, B. Dieny, Phys Rev. B 62, 12271-12281 (2000)).

On place maintenant un élément magnétique 46 ayant une aimantation 1 comme représenté à la figure 5 sur ou sous cette couche 43, par exemple sous celle-ci comme représenté à la figure 6. Cet élément 46 a un champ de retournement plus élevé (au moins 1,1 fois plus élevé) que celui de la couche continue 43, si bien que son aimantation ne se retourne pas lors des processus d'écriture de la couche continue 43. La référence 25 désigne l'aimantation de la couche magnétique 43 à gauche de l'élément 46, la référence 26 sur l'élément 46 et la référence 27 à droite de l'élément 46. La courbe 3 illustre l'allure calculée du champ rayonné par l'élément 46 à la verticale de l'élément, les lignes pointillées 19 bordant verticalement l'élément 46.

Lorsqu'un domaine est retourné localement sur l'élément de bas vers le haut, il se propage jusqu'à arriver au voisinage de la verticale des bords de l'élément 46, où le champ rayonné par l'élément 46 stabilise énergiquement la paroi du domaine (l'aimantation 26 vers le haut est soumise à un champ rayonné positif tandis que celle vers le bas 25 ou 27 à gauche et à droite de la verticale du plot 46 est soumise à un champ rayonné négatif). Le domaine arrête donc sa propagation et l'information (l'aimantation retournée 26) est confinée à la verticale de l'élément 46 dans un domaine 28 bordé par les lignes 19.

Ce piégeage du domaine magnétique au moment de l'écriture est dû au champ rayonné par l'élément 46 c'est-à-dire à l'aimantation de cet élément 46, qui on l'a vu est peu différente d'un élément 46 à un autre. De plus, la couche magnétique 43 continue (ou polycristalline) n'est pas endommagée par une structuration. Le retournement des différents points mémoires est donc reproductible sur toute la surface du support car ils ont des champs de retournement très proches.

A la figure 6, la couche continue 43 a une aimantation initiale perpendiculaire orientée vers le bas. On renverse localement au-dessus de l'élément 46 le sens de cette aimantation à l'aide d'une tête d'écriture conventionnelle. Le domaine se propage à la verticale de l'élément 46 mais pas en dehors du domaine 28, car il est piégé par le champ rayonné par cet élément 46. Une écriture avec un champ inverse permet de rétablir l'état initial (aimantation vers le bas dans le domaine 28).

Exemples de processus d'écriture :

Les éléments magnétiques 46 ont leur aimantation dans le même sens et ce sens ne varie pas dans le processus d'écriture. Il suffit pour cela par exemple que ces champs de retournement des éléments magnétiques 46 soient plus forts que les champs de retournement de la couche.

Deux configurations de départ peuvent être envisagées :

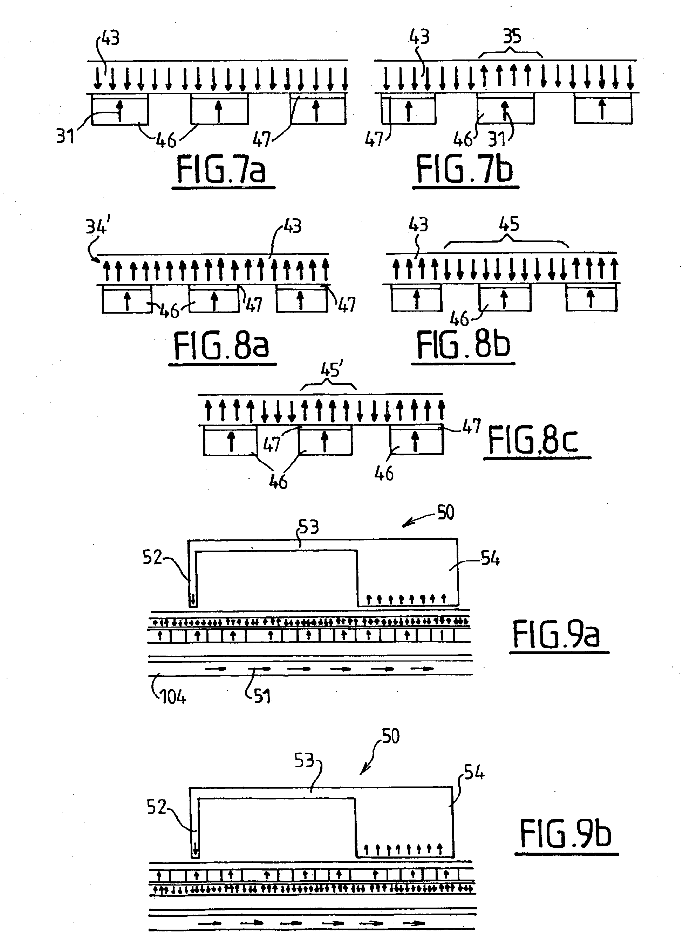

1) les aimantations de la couche non structurée 43 et des éléments 46 séparés par une couche non magnétique 47 sont de sens opposés (figures 7a et 7b). On part d'un état initial (figure 7a) où la couche est aimantée dans le sens contraire aux éléments magnétiques 46 qui ont tous une aimantation dans le même sens. A la figure 7b, un point mémoire 35 a été écrit au-dessus d'un élément 46. Une opération d'écriture d'un point mémoire consiste à nucléer avec une tête d'écriture un domaine d'aimantation. Celui-ci se propage jusqu'au voisinage de la verticale des extrémités du plot 46 où la paroi a besoin d'un surplus d'énergie pour continuer à se déplacer. Le point mémoire 35 est donc confiné au-dessus de l'élément magnétique 46, dans un domaine d'aimantation retournée, à la verticale de l'élément 46. Ce domaine 35 constitue le point mémoire écrit.

Lorsque l'on veut réécrire ce point mémoire, c'est-à-dire renverser l'aimantation 35 de haut vers bas, on applique avec la tête d'écriture un champ magnétique au dessus de l'élément 46 qui retourne l'aimantation au-dessus de cet élément soit par nucléation d'un domaine d'aimantation dans le sens du champs appliqué (qui dans le cas de la figure 7a est dirigé vers le haut) suivi de sa propagation, soit plus probablement pour des raisons d'énergie par "implosion" de domaine 35. En effet, le domaine situé à l'extérieur de l'élément 46 a son aimantation dans le sens du champ magnétique appliqué et se trouve favorisé énergiquement. Il grossit et pénètre sous l'élément 46 en réduisant la taille du domaine 35 jusqu'à finalement le faire disparaître par "implosion". Dans ce sens d'écriture, le phénomène de confinement sous l'action de l'élément magnétique 46 ne se produit pas.

2) Les aimantations de la couche non structurée 43 et des éléments 46 séparés par une couche non magnétique 47 sont de même sens (figures 8a à 8c). Lorsque avec une tête d'écriture, on permet la permutation de l'orientation d'un domaine d'aimantation inverse à la verticale de l'élément magnétique 46, ce domaine se propage. Il peut se propager en dehors du voisinage de la verticale de l'élément magnétique 46 puisque dans ce cas, les sens des aimantations sont tels que la paroi de domaine n'est pas stabilisée par l'élément magnétique 46. Par contre, lorsque ce domaine arrive au voisinage de la verticale des éléments voisins 46, la paroi est stabilisée et le domaine cesse de se propager comme représenté à la figure 8b. Le domaine d'écriture 45 déborde donc de la verticale du plot 46. Lorsque l'on cherche à écrire de nouveau ce point mémoire en changeant son sens cette fois-ci du bas vers le haut, on nuclée un domaine à la verticale de ce même élément 46 et ce domaine se propage jusqu'à arriver au voisinage de la verticale de l'élément. On retrouve en effet la situation décrite dans les figures 7a et 7b. Le point mémoire est donc écrit (figure 8c) dans le domaine 45' confiné à la verticale du plot 46. Les écritures ultérieures de ce point mémoire sont ensuite semblables au processus décrit aux figures 7a et 7b. La paroi magnétique est ainsi stabilisée au voisinage de la verticale des extrémités des éléments magnétiques (ou plots) et on se retrouve pour la suite dans la situation de la figure 7b.

Les figures 9a et 9b illustrent le processus d'écriture utilisant une tête standard d'écriture perpendiculaire sur deux exemples de médium selon l'invention : d'une part avec la couche structurée 40 sous la couche 43 porteuse de l'information (figure 9a) et d'autre part avec cette couche structurée 40 au dessus (figure 9b). La tête d'écriture présente une pièce polaire d'écriture 53, un pôle d'écriture 52, un pôle 54 de retour du champ magnétique. Comme aux figures 2, 3 et 4a à 4c, une éventuelle sous-couche 104 permet de canaliser le champ vers le pôle de retour. Les flèches 51 représentent l'aimantation de cette couche dans le cas où un domaine vers le bas est écrit.

L'écriture de ces médias est identique à celles des médias plus conventionnels et peut se faire avec les mêmes têtes d'écriture 50 et les mêmes niveaux de champ que celles utilisées couramment dans l'enregistrement perpendiculaire. La figure 9a représente une vision schématique de l'écriture d'un domaine vers le bas dans les cas où la couche structurée 40 est située sous la couche 43 porteuse de l'information alors que le cas où elle est située au dessus est illustré à la figure 9b. L'aimantation des éléments magnétiques ou plots n'est pas affectée par le champ rayonné par la tête d'écriture (dans le cas de la figure elle reste vers le haut). Le pôle d'écriture 52 est aimanté vers le bas au moyen d'un courant passant dans un enroulement (non représenté ici) autour de la pièce polaire 53. Il génère un champ magnétique qui se ferme sur le pôle de retour de préférence via la sous-couche 104. La couche 43 porteuse de l'information est soumise à ce champ magnétique et quand célui-ci est supérieur au champ de retournement de la couche 43 (dans le processus d'écriture), son aimantation se retourne et un point mémoire est écrit. Le pôle de retour 54 a des dimensions beaucoup plus grandes que celle du pôle d'écriture si bien que le champ est beaucoup moins intense (le flux $\iint \vec{B}.d\vec{S}$ est conservé) sous ce pôle et les points mémoires situés en dessous du pôle de retour 54 ne se retournent pas. Ceci est conforme à l'état de l'art de l'enregistrement perpendiculaire.

Une différence néanmoins est à noter : le champ qui s'exerce sur le point mémoire est la somme du champ rayonné par le pôle d'écriture 52 de la tête d'écriture (et fermé ou non par la sous-couche 104) et du champ rayonné par les éléments magnétiques 46.

Ainsi, par exemple si le champ dans les éléments magnétiques 46 est orienté vers le haut comme dans les figures 9a et 9b, le champ nécessaire au retournement de bas en haut de l'aimantation du point mémoire est égal à $H_r$ - $H_s$ tandis que celui nécessaire au retournement de haut en bas est égal à - $H_r$-$H_s$, où $H_r$ est le champ positif à appliquer pour retourner l'aimantation du point mémoire (dans cet exemple on a considéré que ce champ pour retourner de bas en haut et de haut en bas était le même, ce qui est généralement le cas) ; et $H_s$ est le champ positif rayonné par les éléments d'aimantation vers le haut sur le plot.

On peut noter aussi que le dispositif d'enregistrement selon l'invention (support d'enregistrement 43 et éléments magnétiques 46) peut être utilisé aussi au besoin dans un empilement sans sous-couche 104. Dans ce cas, l'empilement est plus simple. Par exemple, le dispositif d'enregistrement (support d'enregistrement 43 et couche 40) peut être directement déposé sur un substrat de disque dur (dans les mêmes matériaux que décrit précédemment). L'écriture du support 43 peut alors se faire comme indiqué précédemment.

Dans tous les cas, la lecture se fait de la même manière que pour la lecture de médias perpendiculaires, à savoir au moyen d'un élément magnétorésistif, à base de vanne de spin métallique ou, actuellement, de jonction tunnel magnétique.

La tête lit le point mémoire suivant que l'aimantation est dirigée vers le haut ou vers le bas. Dans le cas de l'invention, se rajoute au champ rayonné par le point mémoire celui qui est généré par les éléments magnétiques 46. Mais comme ceux-ci gardent leur aimantation inchangée et que d'autre part la hauteur de la tête de lecture par rapport à cette structure ne varie pas, le champ rayonné par les éléments 46 qui s'ajoute à celui rayonné par le point mémoire n'agit que comme un décalage constant qu'il suffit de connaître (par exemple en le mesurant au préalable ou en le calculant).

Le procédé de fabrication du dispositif selon l'invention met en oeuvre des techniques connues de l'Homme de l'Art.

La réalisation d'une couche structurée permet d'obtenir des éléments magnétiques de contour défini séparés par des parties non magnétiques 41 ou 41'.

La couche structurée est de préférence amorphe ou cristalline. Dans le cas où elle est polycristalline, chaque élément magnétique présente de préférence plusieurs grains.

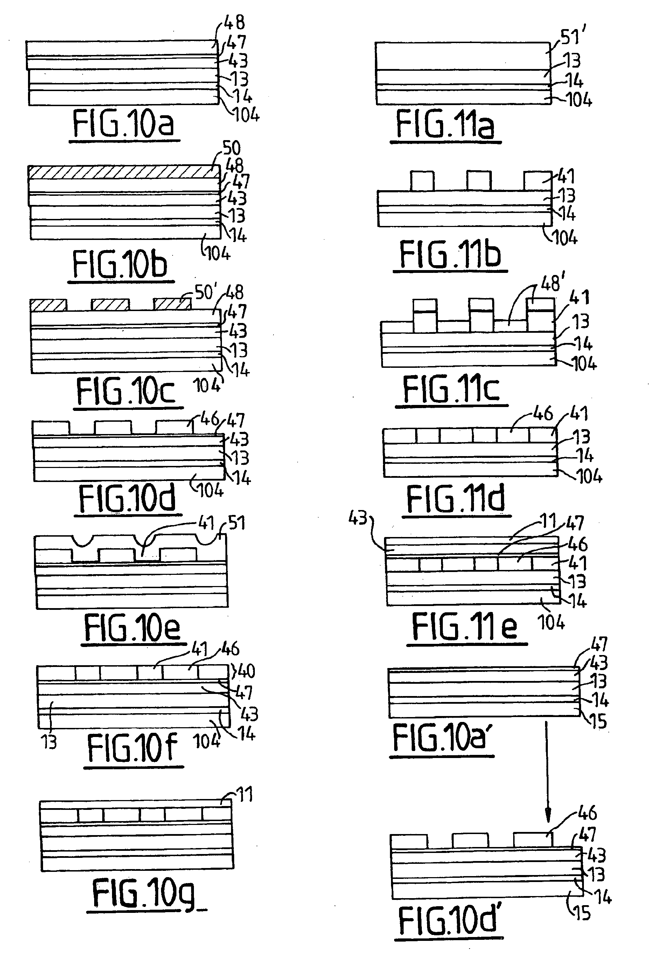

Suivant que la couche structurée est placée au dessus ou au dessous de la couche porteuse de l'information, deux exemples de fabrication sont donnés aux figures 10a et 10b.

Les ultra-hautes densités d'enregistrement, correspondent à 0,155 Tbit/cm$^2$ (1 Tbit/pouce$^2$) et au-delà. 0,155 Tbit/cm$^2$ (1 Tbit/pouce$^2$) implique des dimensions de 25nm x 25nm soit par exemple un point mémoire de 20 nm x 20 nm séparé de son voisin par 5 nm.

La largeur des parties non magnétiques 41 ou 41' peut être en pratique choisie entre 2 nm et 20 nm. Cette largeur est de préférence choisie pour éviter un couplage d'échange entre les éléments magnétiques adjacents.

La structuration à cette échelle de la couche structurée 40 peut être actuellement obtenue par lithographie électronique ou nano-impression puis par gravure par exemple par une étape de gravure sèche réactive.

Les figures 10a à 10g correspondent au cas où la couche structurée 40 présentant des plots magnétiques 46 est située au dessus de la couche 43 porteuse de l'information. Dans le premier cas, l'empilement est réalisé, par exemple par dépôt par pulvérisation, sur le substrat 16 du disque dur non représenté ici (cf. fig. 2) : à savoir successivement une sous-couche "magnétiquement douce" 104 ; la couche intermédiaire 14 ; une éventuelle sous-couche 13 à la couche d'enregistrement: la couche 43 support de l'information; éventuellement la couche séparatrice non magnétique 47 puis au final une couche magnétique 48 qui sera structurée en plots 46.

Les couches 43 et 48 sont dans un matériau à aimantation perpendiculaire qui peut être déposé par tout procédé connu (pulvérisation, évaporation, dépôt électrochimique etc ...) La première étape consiste à structurer la couche magnétique. Cette opération peut être réalisée par exemple en étalant de la résine photo- ou électrosensible 50 que l'on expose pour la structurer ou bien en déposant un polymère ou une résine 50 (Figure 10b) que l'on structure par un procédé de nano-impression. Le résultat 50' de la structuration est représenté à la Figure 10c. Ce motif est ensuite transféré dans la couche magnétique 46 par gravure, par exemple par gravure sèche par faisceau d'ions, ou par gravure sèche réactive (Figure 10d). Cette structure est ensuite recouverte d'un matériau non magnétique 51, par exemple du SiO$_2$ ou un autre diélectrique ou bien encore un métal non magnétique (Figure 10e). Une étape de planarisation, par exemple utilisant un procédé de planarisation mécano-chimique bien connu dans l'industrie électronique permet d'obtenir une couche structurée 40 (Figure 10f) présentant un réseau de plots magnétiques 46 séparés par du matériau non magnétique 41 sur laquelle peut finalement être déposée la sur-couche 11 (figure 10g).

Une variante représentée aux figures 10a' et 10d' consiste à déposer l'empilement jusqu'à la couche intermédiaire 47. La structure magnétique (Figure 10d') est alors obtenue non plus par gravure mais directement par dépôt, par exemple par un procédé dit "lift-off" utilisant une résine exposée ou un polymère puis une nano-impression. La suite du procédé est identique.

Dans la variante préférée (Figures 11 a à 11e) où la couche structurée 40 est située au dessous de la couche 43 support d'information, une mise en oeuvre peut être de déposer sur le substrat 16 du disque dur non représenté les couches 104, 14 et 13 comme dans le cas précédent.

Une couche non magnétique 51' est alors déposée (Figure 11a). Elle est alors structurée (Figure 11 b) pour dégager des trous à l'emplacement des plots 46 et pour former le matériau non magnétique conservé 41, par les mêmes techniques que celles qui ont permis d'obtenir les figures 10c et 10d. Le matériau magnétique 48' est alors déposé sur cette structure (Figure 11c). Une étape de planarisation, identique à celle décrite précédemment, permet d'obtenir la couche structurée 40 consistant en un réseau de plots magnétiques 46 séparés par les régions non magnétiques 41 (Figure 11 d). Sur la couche 40, peuvent ensuite être déposées les couches 43 support de l'information et la sur-couche éventuelle 11.

On comprendra que pour chacune des deux variantes, les plots magnétiques peuvent être réalisés aussi bien par structuration directe des plots ou bien par structuration d'une couche non magnétique pour dégager des trous à l'emplacement futur des plots.

On peut également réaliser un dépôt organisé de nanostructures magnétiques organisées par voie physique et/ou chimique par exemple selon la technique décrite dans "Nanofabricated and Self-assembled magnetic structures as data storage media" par B.D. Terris et T. Thompson, J. Phys. D: Applied Physics 38 (2005) p. 199 à 222. Ce dépôt peut être suivi du dépôt d'une couche 51 de matériau non magnétique puis de sa planarisation.

Le dispositif d'enregistrement est constitué de deux "couches" aux fonctions différentes : d'une part, un support d'enregistrement présentant une ou plusieurs couches élémentaires, qui est porteur de l'information et a de préférence une anisotropie suffisante pour garder l'information sur une durée de par exemple dix ans (face aux fluctuations thermiques) sans que le champ de retournement d'un point soit trop grand, et d'autre part des éléments magnétiques qui sont répartis dans une couche structurée et qui produisent le champ qui confine les domaines définissant les points mémoire.

Suivant les champs de retournement de la couche 43 porteuse de l'information et le champ que l'on veut délivrer avec la tête d'écriture, le ou les éléments constitutifs des plots 46 peuvent être ajustés pour, par exemple, optimiser la valeur de l'aimantation à saturation.

En effet, les matériaux constituant la couche d'enregistrement 43 et les matériaux constituant les plots 46, de même que l'épaisseur de la couche d'enregistrement 43 et des plots 46, peuvent être totalement différents et donc être optimisés indépendamment. La couche 43 et les plots 46 ne sont en effet couplés que par le champ dipolaire produit par les plots 46 qui sert au confinement des points mémoire.

Un autre point important est que les technologies conventionnelles sans structuration utilisent des médias polycristallins dont les grains sont découplés, un point d'information occupant une centaine de grains. Dans le cas des médias structurés en général et de l'invention en particulier, cette couche n'a plus besoin d'être polycristalline, puisque la séparation entre les points mémoires est physique et est donnée par la structuration des plots 46 situées en dehors de la couche 43. On peut donc prendre des couches continues, présentant une ou plusieurs couches élémentaires continues.

Exemples :

La couche 43 et les plots 46 sont formées d'un empilement de bi-couches Co/Pt, dont on a choisi le nombre de répétitions pour obtenir des champs de retournement des plots plus importants que celui de la couche continue de stockage.

Les plots 46 de la couche structurée sont composés de quatre empilements successifs d'un bicouche élémentaire comprenant une couche élémentaire de 0,6 nm de Co et une couche élémentaire de 1,8 nm de Pt (soit huit couches en tout).

La couche séparatrice 47 est du platine dont l'épaisseur est choisie pour optimiser le champ produit dans la couche 43 par les éléments 46, par exemple 2nm.

Si la couche continue est constituée, comme les plots d'un empilement d'une bi-couche élémentaire de 0,6 nm et Co et de 1,8 nm de Pt répété quatre fois, le champ de retournement de la couche 43 est de 0,06 T, et celui des plots est au moins égal à 0,4 T, c'est-à-dire que le champ de retournement des plots 46 est au moins égal à 7 fois le champ de retournement de la couche 43. On note en effet que la structuration en plots augmente beaucoup le champ de retournement par rapport à une couche continue et la valeur de ce champ de retournement augmente d'autant plus que les plots sont plus petits.

Pour des plots 46 de 200 nm; et une couche séparatrice 47 en Pt de 2 nm d'épaisseur, le champ dipolaire rayonné sur la couche continue 43 qui jouxte le plot a une valeur maximale de 0,05 T ($3_2$ et $3_3$ sur la figure 5a) et dans la région de plateau $3_5$ une valeur sensiblement égale à 0,015 T. La valeur de ce champ dipolaire peut être ajustée en modifiant l'épaisseur de la couche séparatrice 47. Plus cette épaisseur augmente, moins le champ dipolaire rayonné sur la couche continue 43 est élevé.

Les couches 43 et/ou les plots 46 peuvent être constitués de toute multicouche à aimantation perpendiculaire comme par exemple : CoPt, Co/Pd ; Fe/Pt ; Fe/Pd, Au/Co ; ....

La couche 43 et/ou les plots 46 peuvent aussi être constitués de multicouches alternant des couches élémentaires en métal et en diélectrique ou en semi-conducteurs, par exemple des multicouches à base de Co/ Alumine ; Co/Silicium....

La couche 43 et/ou les plots 46 peuvent aussi être constitués d'alliages à aimantation perpendiculaires comme les alliages FePt, FePd, CoPt, ...., ou bien encore des alliages qui à l'instar de TbFeCo et GdCo ... incluent des métaux de transition et des terres rares.

Pour assurer une aimantation dans le même sens du support d'enregistrement (43) et des éléments magnétiques (46), on peut soumettre le dispositif à un fort champ magnétique supérieur au champ de retournement des éléments magnétiques 46. Si on souhaite que le support d'enregistrement 43 ait une orientation inverse de celle des éléments magnétiques 46, il suffit de soumettre le dispositif à un champ magnétique dont l'intensité est supérieure au champ de retournement du support d'enregistrement 43, mais inférieur au champ de retournement des éléments magnétiques 46.

**Revendications**

1. Dispositif d'enregistrement magnétique comprenant au moins un support d'enregistrement non structuré présentant au moins une couche magnétique élémentaire, ledit support d'enregistrement ayant une aimantation perpendiculaire au plan dudit support par couplage du support d'enregistrement avec un pôle d'écriture d'une tête d'enregistrement, ainsi que des éléments magnétiques (46) ayant une aimantation prédéterminée perpendiculaire au plan dudit support d'enregistrement (43) et un champ de retournement supérieur au champ de retournement du support d'enregistrement (43), et qui sont séparés du support d'enregistrement (43) par une couche (47) en un matériau non magnétique, les éléments magnétiques (46) étant espacés les uns des autres par des régions non magnétiques (41), chaque élément magnétique (46) définissant lors d'une opération d'écriture sur le support d'enregistrement (43) un point mémoire dans le support d'enregistrement (43) ; **caractérisé en ce que** ladite couche (47) en un matériau non magnétique est une couche de découplage (47) ayant une épaisseur telle que les éléments magnétiques (46) produisent seulement un champ dipolaire dans le support d'enregistrement (43) sans couplage par échange ; et **en ce que** le dispositif comprend également une tête d'écriture magnétique perpendiculaire (50) adaptée pour générer un champ magnétique d'intensité suffisante pour retourner localement l'aimantation dudit support d'enregistrement (43).

2. Dispositif selon la revendication 1, **caractérisé en ce que** le champ de retournement des éléments magnétiques (46) est compris entre 1,1 et 20 fois et notamment entre 2 et 10 fois le champ de retournement du support d'enregistrement (43).

3. Dispositif selon une des revendications 1 ou 2, **caractérisé en ce que** le support d'enregistrement (43) et/ou les éléments magnétiques (46) comportent plusieurs couches élémentaires.

4. Dispositif selon une des revendications 1 ou 2, **caractérisé en ce que** le support d'enregistrement (43) est en un alliage, notamment FePt, FePd, CoPt, Tb-FeCo, GdCo.

5. Dispositif selon la revendication 3, **caractérisé en ce que** le support d'enregistrement (43) comporte au moins une bi-couche magnétique élémentaire, notamment Co/Pt, Co/Pd, Fe/Pt, Fe/Pd, Au/Co.

6. Dispositif selon la revendication 3, **caractérisé en ce que** le support d'enregistrement (43) comporte au moins deux couches élémentaires associant un métal et un diélectrique ou un semiconducteur, notamment Co/Si, Co/alumine.

7. Dispositif selon une des revendications 1 ou 2, **caractérisé en ce que** le support d'enregistrement (43) est en un matériau polycristallin.

8. Dispositif selon une des revendications précédentes, **caractérisé en ce que** la couche de découplage (47) en matériau non magnétique a une épaisseur comprise entre 0,5 et 15 nm.

9. Dispositif selon une des revendications précédentes, **caractérisé en ce que** les régions non magnétiques sont des espaces d'air (41') entre les éléments magnétiques (46).

10. Dispositif selon une des revendications 1 à 9, **caractérisé en ce que** les régions non magnétiques (41) sont en un matériau solide non magnétique de manière à former avec les éléments magnétiques une couche sensiblement plane.

11. Dispositif selon une des revendications précédentes, **caractérisé en ce que** l'ensemble constitué par le support d'enregistrement (43) et les éléments magnétiques (46) est disposé sur la surface d'un substrat (16) d'un moyen de stockage d'informations tel qu'un disque dur.

12. Dispositif selon la revendication 11, **caractérisé en ce que** les éléments magnétiques (46) sont en contact avec la surface du substrat de moyen de stockage.

13. Dispositif selon la revendication 11, **caractérisé en ce que** le support d'enregistrement (43) est en contact avec ladite surface du substrat de moyen de stockage.

## Claims

1. Magnetic recording device comprising at least one unstructured recording support exhibiting at least one elementary magnetic layer, said recording support having a magnetization perpendicular to the plane of said support by coupling of the recording support with a write pole of a recording head, and magnetic elements (46) having a determined magnetization perpendicular to the plane of said recording support (43) and an inversion field greater than the inversion field of the recording support (43), and which are separated from the recording support (43) by a layer (47) made of a nonmagnetic material, the magnetic elements (46) being spaced apart from one another by nonmagnetic regions (41), each magnetic element (46) defining during a write operation on the recording support (43) a memory point in the recording support (43), **characterized in that** said layer (47) made of a nonmagnetic material is a decoupling layer (47) having a thickness such that the magnetic elements (46) only produce a dipolar field in the recording support (43) without coupling by exchange, and **in that** the device also comprises a perpendicular magnetic writing head (50) adapted to generate a magnetic field of sufficient intensity to locally reverse the magnetization of the said recording support (43).

2. Device according to Claim 1, **characterized in that** the inversion field of the magnetic elements (46) is between 1.1 and 20 times and in particular between 2 and 10 times the inversion field of the recording support (43).

3. Device according to one of Claims 1 or 2, **characterized in that** the recording support (43) and/or the magnetic elements (46) comprise several elementary layers.

4. Device according to one of Claims 1 or 2, **characterized in that** the recording support (43) is made of an alloy, in particular FePt, FePd, CoPt, TbFeCo, GdCo.

5. Device according to Claim 3, **characterized in that** the recording support (43) comprises at least one elementary magnetic bilayer, in particular Co/Pt, Co/Pd, Fe/Pt, Fe/Pd, Au/Co.

6. Device according to Claim 3, **characterized in that** the recording support (43) comprises at least two elementary layers associating a metal and a dielectric or a semiconductor, in particular Co/Si, Co/alumina.

7. Device according to one of Claims 1 or 2, **characterized in that** the recording support (43) is made of a polycrystalline material.

8. Device according to one of the preceding claims, **characterized in that** the nonmagnetic material decoupling layer (47) has a thickness of between 0.5 and 15 nm.

9. Device according to one of the preceding claims, **characterized in that** the nonmagnetic regions are air spaces (41') between the magnetic elements (46).

10. Device according to one of Claims 1 to 9, **characterized in that** the nonmagnetic regions (41) are made of a nonmagnetic solid material so as to form with the magnetic elements a substantially plane layer.

11. Device according to one of the preceding claims, **characterized in that** the assembly consisting of the recording support (43) and the magnetic elements (46) is disposed on the surface of a substrate (16) of an information storage means such as a hard disk.

12. Device according to Claim 11, **characterized in that** the magnetic elements (46) are in contact with the surface of the storage means substrate.

13. Device according to Claim 11, **characterized in that** the recording support (43) is in contact with said surface of the storage means substrate.

**Patentansprüche**

1. Vorrichtung zur magnetischen Speicherung, umfassend wenigstens einen nicht strukturierten Speicherträger, welcher wenigstens eine elementare magnetische Schicht aufweist, wobei der Speicherträger durch Kopplung des Speicherträgers mit einem Schreibpol eines Speicherkopfes eine zu der Ebene des Trägers senkrechte Magnetisierung aufweist, sowie magnetische Elemente (46), welche eine zu der Ebene des Speicherträgers (43) senkrechte vorbestimmte Magnetisierung und ein Kippfeld aufweisen, das größer ist als das Kippfeld des Speicherträgers (43), und welche von dem Speicherträger (43) getrennt sind durch eine Schicht (47) aus einem nicht magnetischen Material, wobei die magnetischen Elemente (46) voneinander durch nicht magnetische Bereiche (41) beabstandet sind, wobei jedes magnetische Element (46) bei einem Schreibvorgang auf dem Speicherträger (43) einen Speicherpunkt in dem Speicherträger (43) definiert: **dadurch gekennzeichnet, dass** die Schicht (47) aus einem nicht magnetischen Material eine Entkopplungsschicht (47) ist, welche eine solche Dicke aufweist, dass die magnetischen Elemente (46) nur ein Dipolfeld in dem Speicherträger (43) ohne Austauschkopplung erzeugen; und dass die Vorrichtung außerdem einen Kopf zum senkrechten magnetischen Schreiben (50) umfasst, welcher dazu ausgestaltet ist, ein Magnetfeld mit einer zum lokalen Kippen der Magnetisierung des Speicherträgers (43) ausreichenden Intensität zu erzeugen.

2. Vorrichtung nach Anspruch 1, **dadurch gekennzeichnet, dass** das Kippfeld der magnetischen Elemente (46) zwischen 1,1 und 20 mal und insbesondere zwischen 2 und 10 mal dem Kippfeld des Speicherträgers (43) enthalten ist.

3. Vorrichtung nach einem der Ansprüche 1 oder 2, **dadurch gekennzeichnet, dass** der Speicherträger (43) und/oder die magnetischen Elemente (46) mehrere elementare Schichten umfassen.

4. Vorrichtung nach einem der Ansprüche 1 oder 2, **dadurch gekennzeichnet, dass** der Speicherträger (43) eine Legierung ist, insbesondere FePt, FePd, CoPt, TbFeCo, GdCo.

5. Vorrichtung nach Anspruch 3, **dadurch gekennzeichnet, dass** der Speicherträger (43) wenigstens eine elementare magnetische Doppelschicht umfasst, insbesondere Co/Pt, Co/Pd, Fe/Pt, Fe/Pd, Au/Co.

6. Vorrichtung nach Anspruch 3, **dadurch gekennzeichnet, dass** der Speicherträger (43) wenigstens zwei elementare Schichten, welche ein Metall und ein Dielektrikum oder einen Halbleiter umfasst, insbesondere Co/Si, Co/Aluminiumoxid.

7. Vorrichtung nach einem der Ansprüche 1 oder 2, **dadurch gekennzeichnet, dass** der Speicherträger (43) aus einem polikristallinen Material ist.

8. Vorrichtung nach einem der vorhergehenden Ansprüche, **dadurch gekennzeichnet, dass** die Entkopplungsschicht (27) aus nicht magnetischem Material eine Dicke aufweist, welche zwischen 0,5 und 15 nm enthalten ist.

9. Vorrichtung nach einem der vorhergehenden Ansprüche, **dadurch gekennzeichnet, dass** die nicht magnetischen Bereiche Lufträume (41') zwischen den magnetischen Elementen (46) sind.

10. Vorrichtung nach einem der Ansprüche 1-9, **dadurch gekennzeichnet, dass** die nicht magnetischen Bereiche (41) aus einem nicht magnetischen festen Material sind, so dass sie mit den magnetischen Elementen eine im Wesentlichen ebene Schicht bilden.

11. Vorrichtung nach einem der vorhergehenden Ansprüche, **dadurch gekennzeichnet, dass** die durch den Speicherträger (43) und die magnetischen Elemente (46) gebildete Anordnung auf der Oberfläche eines Substrats (16) eines Informationsspeichermittels wie einer Festplatte angeordnet ist.

12. Vorrichtung nach Anspruch 11, **dadurch gekennzeichnet, dass** die magnetischen Elemente (46) in Kontakt mit der Oberfläche des Speichermittelsubstrats sind.

13. Vorrichtung nach Anspruch 11, **dadurch gekennzeichnet, dass** der Speicherträger (43) in Kontakt mit der Oberfläche des Speichermittelsubstrats ist.

FIG.1

FIG.2

FIG.3

FIG.4a

FIG.4b

FIG.4c

FIG.5a

FIG.5b

FIG.6

FIG.7a

FIG.7b

FIG.8a

FIG.8b

FIG.8c

FIG.9a

FIG.9b

FIG.10a

FIG.10b

FIG.10c

FIG.10d

FIG.10e

FIG.10f

FIG.10g

FIG.11a

FIG.11b

FIG.11c

FIG.11d

FIG.11e

FIG.10a'

FIG.10d'

## RÉFÉRENCES CITÉES DANS LA DESCRIPTION

**Documents brevets cités dans la description**

- US 20070172705 A
- US 20070124749 A
- US 20030022023 A, Carey
- US 6686070 B, Futamoto


**Littérature non-brevet citée dans la description**

- **B. D. TERRIS ; T. THOMSON ; G. HU.** Patterned media for future magnetic data storage. *Microsyst. Tech.,* 2007, vol. 13, 189-196
- **O FRUCHART ; J-F. NOZIÈRES ; W. WERNSDORFER ; D. GIVORD ; F. ROUSSEAUX ; D. DECANINI.** Enhanced Coercivity in Submicrometer-Sized Ultrathin Epitaxial Dots with In-Plane Magnetization. *Physical Review Letters,* 1999, vol. 82, 1305
- **S. LANDIS ; B. RODMACQ ; B. DIENY.** Magnetic properties of Co/Pt multilayers deposited on silicon dot arrays. *Physical Review B,* 2000, 6212271
- **T. NAGAHAMA.** Electric Résistance of Magnetic Domain with NiFe wires with CoSm Pinning Pads. *Journal of Applied Physics,* vol. 87, 5648
- **S. LANDIS ; B. RODMACQ ; B. DIENY.** *Phys Rev. B,* 2000, vol. 62, 12271-12281
- **B.D. TERRIS ; T. THOMPSON.** Nanofabricated and Self-assembled magnetic structures as data storage media. *J. Phys. D: Applied Physics,* 2005, vol. 38, 199-222